# FASCICULE DE BREVET EUROPEEN

(11) **EP 2 802 954 B1**
(45) Date de publication et mention de la délivrance du brevet: **01.11.2017**
(21) Numéro de dépôt: 12816503.2
(22) Date de dépôt: 24.12.2012
(51) Int. Cl.: G05D 23/19, F24F 11/00

(54) **AMÉLIORATION DU SYSTÈME DE RÉGULATION DE TEMPERATURE DU CHAUFFAGE D'UN IMMEUBLE**
VERBESSERUNG DER TEMPERATURREGELEINHEIT EINES HEIZSYSTEMS IN EINEM GEBÄUDE
IMPROVEMENT TO THE TEMPERATURE CONTROL UNIT FOR THE HEATING SYSTEM IN A BUILDING

(30) Priorité: 12.01.2012 CH 57122012
(43) Date de publication de la demande: 19.11.2014
(73) Titulaire: Neurobat AG, 9200 Gossau SG (CH)
(72) Inventeur: LINDELÖF, David, 1288 Aire-La-Ville (CH); GUILLEMIN, Antoine, 1303 Penthaz (CH); MALIK, Sohail, 5246 Scherz AG (CH)
(74) Mandataire: Gevers SA
(86) Numéro de dépôt international: PCT/IB2012/002796
(87) Numéro de publication internationale: WO 2013/104948

(56) Documents cités:
- EP-A1- 0 980 034
- BAEK J: "SIMULATIONAL ANALYSIS OF ADAPTIVE OUTDOOR RESET CONTROL based on FUZZY TARGET TEMPERATURE GAP for a hydronic radiant floor heating system", JOURNAL OF ASIAN ARCHITECTURE AND BUILDING ENGINEERING,, vol. 9, no. 1, 2 mai 2010 (2010-05-02), pages 251-257, XP009167164,

## Description

### Domaine technique

La présente invention concerne un système de régulation de chauffage d'un immeuble ou d'un bâtiment qui met en oeuvre des réseaux neuronaux, ou équivalents, pour réaliser des fonctions prédictives et des fonctions d'apprentissage du comportement de l'immeuble, des fonctions météorologiques et/ou du confort des usagers.

### Etat de la technique

Un tel système de régulation de chauffage a déjà été décrit dans le brevet Européen EP 0 980 034 B1 ainsi que dans l'article de J.BAEK : « Simulation analysis of adaptative outdooor reset control based on fuzzy target temperature gap for a hydronic radiant floor heating system » paru dans le « Journal of Asian Architecture And building Engineering » (Vol. 9, no. 1, 1 mai 2010, page 251-257, XP009167164). Ce système de l'art antérieur est prévu pour élaborer, à partir de diverses informations fournies par des capteurs tant internes qu'externes et au moyen de réseaux neuronaux, une température de consigne à appliquer au bloc de contrôle d'un système conventionnel de chauffage. Dans un système conventionnel de chauffage cette température de consigne est comparée à la température d'entrée du circuit de chauffage et la différence est utilisée pour contrôler une vanne de mixage qui règle la température du fluide caloporteur alimentant ledit circuit de chauffage.

Le système de l'art antérieur tient compte d'éléments tels que l'environnement extérieur, le comportement thermique de l'immeuble et/ou le confort des usagers ainsi que de leur évolution prédictive pour optimiser l'énergie à fournir à l'installation de chauffage ; cette énergie étant fonction de la différence entre la température du fluide d'entrée et celle du fluide de retour. Un tel concept d'optimisation de l'énergie à fournir présente cependant l'inconvénient d'être mal ou même pas applicable du tout à des installations de chauffage qui font usage de vannes thermostatiques, par exemple, au niveau des radiateurs. En effet, si toutes les vannes thermostatiques sont fermées, cela ne fait aucun sens de fournir une quantité donnée d'énergie, car cette énergie ne peut être consommée. Il peut donc s'ensuivre une dérive difficilement contrôlable du système de chauffage.

Un autre inconvénient du système de l'art antérieur est que son installation implique une adaptation du système conventionnel et donc, d'une part, nécessite l'intervention d'un spécialiste et, d'autre part, augmente le coût total de l'installation.

### Divulgation de l'invention

Un but de la présente invention est un système de régulation de chauffage d'un immeuble visant à pallier les inconvénients mentionnés ci-dessus.

Un but de la présente invention est un système de régulation de chauffage qui puisse être utilisé avec tous les systèmes de chauffage conventionnels, y compris ceux qui font usage de vannes thermostatiques.

Un autre but de la présente invention est un système de régulation de chauffage qui ne nécessite pas, lors de son installation, une modification notable de l'installation conventionnelle en place.

Un autre but de la présente invention est un système de régulation de chauffage qui puisse être aisément déconnecté pour n'opérer que l'installation conventionnelle.

Un autre but de la présente invention est un système de régulation de chauffage opérable, via une connexion internet, depuis un site distant.

La présente invention a donc pour objet un système de régulation de chauffage d'un immeuble conforme à la revendication 1.

### Brève description des dessins

D'autres caractéristiques et avantages de la présente invention apparaîtront plus clairement à la lecture de la description suivante d'un exemple de réalisation ; ladite description étant faite à titre purement illustratif et en relation avec les dessins joints dans lesquels :
- la figure 1 montre un schéma d'une installation conventionnelle de chauffage d'un bâtiment ;
- la figure 2 montre un schéma général d'une installation de chauffage selon l'invention comportant un système de détermination de la température extérieure modifiée ;
- la figure 3 montre un schéma détaillé dudit système de détermination de la température extérieure modifiée ; et
- la figure 4 montre un exemple de tableau de commande à l'usage des utilisateurs.

### Mode(s) de réalisation de l'invention

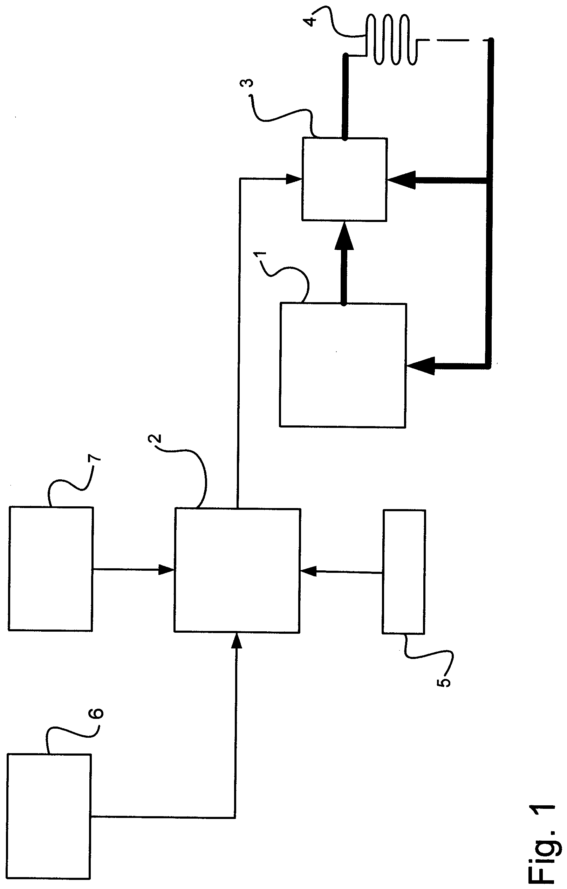

On a montré schématiquement, à la figure 1, une installation conventionnelle de régulation de chauffage d'un immeuble. Le réseau du fluide caloporteur, par exemple de l'eau, est représenté en traits épais tandis que le réseau d'information est en traits minces. L'eau chauffée par la chaudière 1 est envoyée à une vanne de mixage 3, dont la sortie alimente les radiateurs 4. L'eau de retour, après circulation dans les radiateurs, est renvoyée à la chaudière 1 et à la vanne de mixage 3. La proportion d'eau de retour prise par la vanne de mixage est déterminée par la commande issue du bloc de contrôle 2. Ce dernier élabore ce signal de commande sur la base d'informations telles que celles fournies par des capteurs de température extérieure 6 et de température intérieure 7 mais aussi d'autres informations liées au système lui-même, au bâtiment ainsi qu'à d'autres paramètres internes définis par l'installateur, comme la courbe de chauffe, etc. Une pompe (non représentée) peut faire partie du circuit d'entrée et être commandée par ledit circuit de contrôle. Est également indiqué un circuit 5 d'alimentation électrique du bloc de contrôle 2.

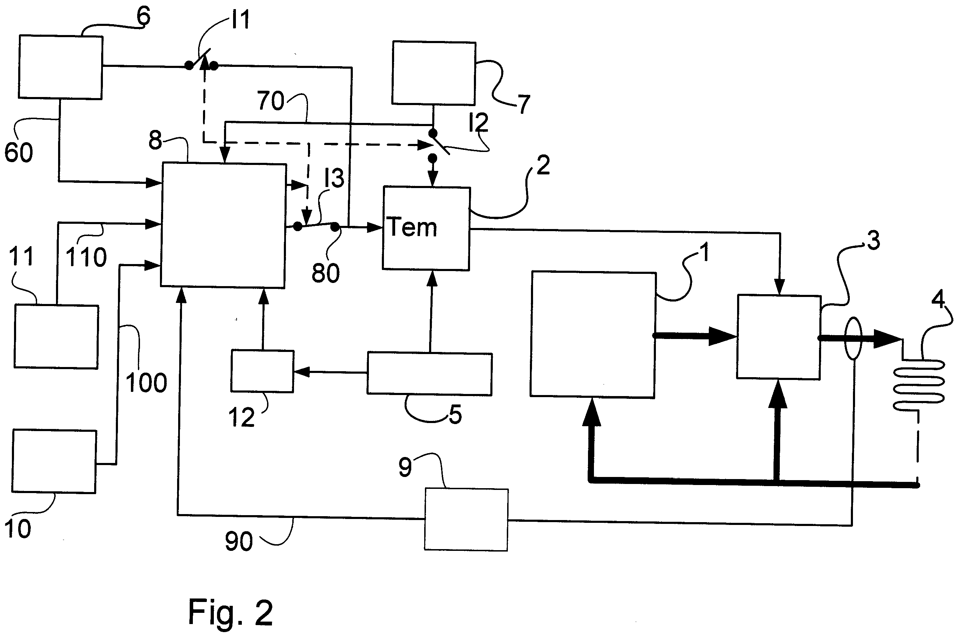

La figure 2 montre, schématiquement, un système de régulation conforme aux principes de la présente invention. Comme mentionné précédemment, Ce système de régulation s'ajoute aux systèmes traditionnels, tel celui représenté à la figure 1. On retrouve donc la chaudière 1, le bloc de contrôle 2, la vanne de mixage 3, les appareils de diffusion de la chaleur ou radiateurs 4, le bloc d'alimentation 5, ainsi que les capteurs 6 et 7 de température extérieure et intérieure, respectivement. En plus des éléments d'un système conventionnel, on trouve un bloc de régulation 8, ainsi que son alimentation propre 12 reliée au bloc d'alimentation 5, un capteur de température du fluide d'entrée 9, un détecteur de présence 10 et un capteur d'ensoleillement 11. Des interrupteurs I1, I2 permettent, sous le contrôle du bloc de régulation 8, de déconnecter les connexions entre les capteurs de température 6 et 7, respectivement, et le bloc de contrôle 2 lorsque le système de régulation de l'invention est actif. Dans ce cas, les sorties 60 et 70 des capteurs 6 et 7, tout comme celles, 110, 100 et 90, du capteur d'ensoleillement 11, du détecteur de présence 10 et du capteur de température du fluide d'entrée 9 sont appliquées au bloc de régulation 8. La sortie 80 du bloc de régulation 8 est appliquée, via l'interrupteur I3 (également commandé par le bloc 8), au bloc de contrôle 2 sur son entrée Tem initialement connectée au capteur de température extérieure 6. On comprendra, toutefois, que, selon les installations existantes, il puisse être parfois nécessaire de remplacer les capteurs de température extérieure et de température intérieure de l'installation conventionnelle par des capteurs équivalents (non représentés) mais compatibles avec le bloc de régulation 8.

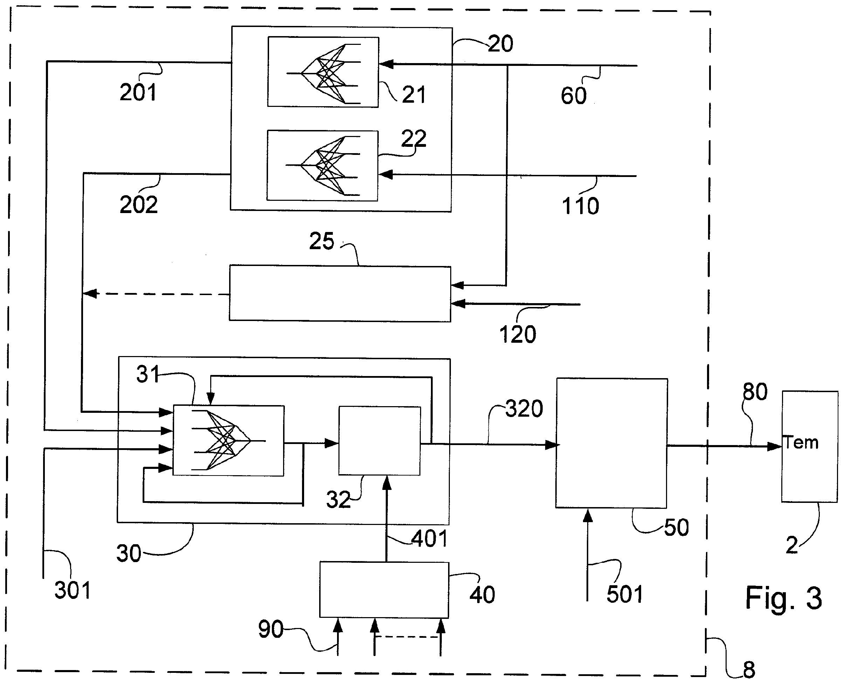

Selon la présente invention, le bloc de régulation 8 élabore, sur la base des informations qu'il reçoit, un signal de température extérieure modifiée Tem qu'il applique à l'entrée, du bloc de contrôle 2, conventionnellement connectée à la sortie d'un capteur de température extérieure. Le bloc de contrôle 2 agit exactement comme s'il recevait une valeur de température extérieure alors qu'en fait il reçoit une valeur modifiée par le bloc de régulation 8, ainsi que cela est expliqué en relation avec la figure 3. Il n'y a donc plus, comme c'était le cas du système de régulation susmentionné de l'art antérieur, de détermination de quantité d'énergie à fournir au système et, par suite, plus de risque de mauvais fonctionnement dû à l'utilisation de vannes thermostatiques dans le système de chauffage.

La figure 2 montre, par ailleurs, que le système de l'invention se connecte au système de chauffage conventionnel installé sans nécessiter de modification de ce dernier. Les conséquences en sont, d'une part, une réduction évidente des coûts d'installation et, d'autre part, une facilité accrue de mise hors service du système de l'invention pour des raisons de maintenance de celui-ci ou autres. Dans le cas où les capteurs de température 6 et 7 doivent être changés pour être compatibles avec le bloc de régulation 8, les interrupteurs I1 et I2 sont alors montés de sorte à déconnecter les anciens capteurs et à connecter à leur place les nouveaux (non représentés). Par ailleurs, si le bloc de régulation 8 est déconnecté (interrupteur I3 ouvert), les interrupteurs I1 et I2 reconnectent automatiquement les capteurs 6 et 7 au bloc de contrôle 2 de sorte que ce dernier revienne à son fonctionnement d'origine. Si, comme indiqué précédemment, les capteurs 6 et 7 avaient été changés pour s'adapter au bloc 8, la déconnection de ce dernier entraîne la reconnexion des anciens capteurs de température 6 et 7 au bloc de contrôle 2 par le biais des interrupteurs I1 et I2 adaptés en conséquence.

La figure 3 montre, de manière détaillée, le bloc de régulation 8 conforme à l'invention. Ce bloc de régulation comprend un ensemble 20 de deux réseaux neuronaux 21 et 22, un bloc 30 de détermination de température de consigne, un circuit 50 de détermination de la température extérieure modifiée et un circuit 40 de détermination de la température de confort. Optionnellement, le bloc de régulation peut comporter un bloc 25 de calcul de la prédiction d'ensoleillement.

Les réseaux neuronaux 21 et 22 déterminent, sur la base des signaux 60 et 110 provenant, respectivement, des capteurs de température extérieure 6 et d'ensoleillement 11, les vecteurs des valeurs prévues de la température extérieure (sortie 201) et des valeurs prévues pour l'ensoleillement (sortie 202). Les réseaux neuronaux 21 et 22 fonctionnent comme décrits dans le document précité de l'art antérieur. Il en est de même du circuit 25 qui peut délivrer un vecteur de valeurs prévues d'ensoleillement à partir des valeurs fournies par le capteur de température extérieure sur la connexion 60 et d'informations d'ensoleillement fournies par un service météorologique et appliquées sur l'entrée 120. Lorsqu'un circuit 25 est prévu, ses vecteurs de sortie sont appliqués sur la connexion 202 à destination du bloc 30. Ce bloc 30 comprend un réseau neuronal 31 et un circuit 32 d'optimisation de la température de départ. Le réseau neuronal 31 reçoit en entrée les vecteurs de sortie du bloc 20 (éventuellement la sortie du circuit 25), la valeur de température intérieure (ou température ambiante) sur la connexion 301, ainsi que la sortie du circuit 32 et sa propre sortie.

Le réseau neuronal 31, dont le fonctionnement est analogue à celui décrit dans le brevet de l'art antérieur précité, représente le modèle thermique du bâtiment et sa sortie est un vecteur qui représente la température intérieure prédite sur un intervalle de temps donné, par exemple sur les six prochaines heures. Ainsi, la première valeur de sortie du réseau 31 correspond à la valeur de la température ambiante et, par la suite, la valeur de sortie dépendra aussi des valeurs passées de température intérieure prédite.

Le circuit 32 détermine et fournit sur sa sortie 320 la température de départ optimisée. Comme indiqué précédemment, ses vecteurs de sortie sont bouclés sur l'entrée du réseau neuronal 31 afin que la sortie du réseau 31 soit la plus proche de la valeur du vecteur de température de confort, délivré par le circuit 40 sur sa sortie 401, tout en ayant une valeur de sortie du circuit 32 aussi faible que possible. Le circuit 40 de détermination de la température de confort reçoit, en entrée, la valeur de la température souhaitée par l'utilisateur (entrée 90), l'indication de présence/absence de ce dernier (cette indication pouvant se présenter sous la forme d'un vecteur de prédiction de présence établi sur la base d'un historique d'une période passée), une indication de fenêtre ouverte ou toute autre indication de confort comme, par exemple, un mode de confort ou d'économie. L'information de sortie du circuit 40, qui constitue la valeur de température de confort souhaitée, dépend bien entendu de la valeur de toutes les entrées. Ainsi, on comprendra que si l'utilisateur est absent, si une fenêtre est ouverte ou si le mode choisi est un mode d'économie, l'information de sortie 401 pourra être réduite. Le bloc 50, dit de détermination de la température extérieure modifiée, reçoit en entrée sur la connexion 320 la température de départ optimisée et sur la connexion 501 la température de départ mesurée et il délivre au bloc 2, sur la connexion 80, un signal de valeur de température extérieure modifiée. Le bloc 50 peut être du type régulateur PID (pour « Proportionnel Intégral Dérivé »), ou équivalent, qui désigne un organe de contrôle permettant d'effectuer une régulation en boucle fermée. Son signal de sortie sera d'autant plus grand que la différence entre ses entrées sera grande.

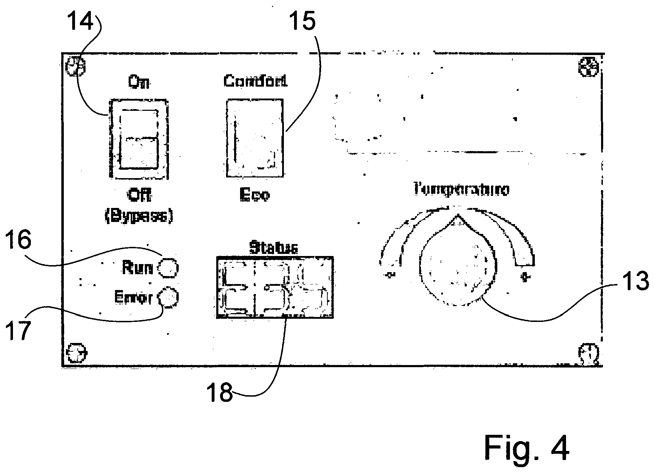

La figure 4 montre un exemple de tableau de commande à l'usage des utilisateurs. Il comporte un bouton 13 de réglage de la température de consigne, un interrupteur 14 de marche/arrêt, un interrupteur 15 d'enclenchement de mode confort ou économique, un voyant 16 d'indication de fonctionnement correct de l'installation, un voyant 17 d'indication d'erreur de fonctionnement et un affichage 18 du code d'erreur (faisant référence à un manuel à disposition de l'utilisateur ou du spécialiste en charge de l'installation). L'interrupteur 14 commande la mise en marche ou l'arrêt (court-circuit) de l'installation de l'invention. L'interrupteur 15 permet de choisir le mode de fonctionnement de l'installation voulu par l'utilisateur. Cette information est envoyée au circuit 40 de détermination de température de confort, ainsi qu'au circuit 32 d'optimisation de la température de départ. L'effet de cette information sur le circuit 40 a déjà été expliqué. S'agissant du circuit 32, il convient de mentionner que, si la position « Confort » est sélectionnée, le circuit 32 minimisera prioritairement la différence entre ses deux entrées (c.-à-d. valeur de sortie du réseau 31 aussi proche que possible de la valeur de sortie du circuit 40 et si la position « Eco » est sélectionnée, alors le circuit 32 minimisera prioritairement la valeur de sa sortie. Le bouton 13 permet d'agir en plus ou en moins sur la valeur de la température de consigne ; action qui est transmise au circuit 40 de détermination de la température de confort.

Selon une variante intéressante de la présente invention, le bloc de régulation est implémenté sur un site éloigné et l'installation de chauffage de l'utilisateur est équipée d'un modem apte à envoyer, par exemple via internet, les informations requises, à savoir : températures intérieure et extérieure, température de l'eau de départ, niveau d'ensoleillement, présence de l'utilisateur, température de consigne etc. et à recevoir l'information de température extérieure modifiée déterminée par le bloc de régulation sur site éloigné. Alternativement, l'information transmise à l'installation de chauffage sera l'information de température de départ optimisée (à savoir l'information sur la sortie 320). Une telle disposition est particulièrement avantageuse pour de grandes installations déjà équipées de moyens informatiques.

De plus, il convient de signaler qu'une connexion à distance permet également de faire des mises à jour du système de régulation selon l'invention.

La description ci-dessus a été faite en référence à un exemple de réalisation particulier. Il est évident, toutefois, que l'invention peut être aménagée en fonction des besoins sans pour autant sortir de son cadre. Par ailleurs, bien qu'il ait été mentionné une application conventionnelle utilisant l'eau comme fluide caloporteur ainsi que l'utilisation de radiateurs comme diffuseur de chaleur, il est néanmoins évident que l'invention peut également s'appliquer dans des bâtiments à chauffage par le sol ou encore avec d'autres fluides tels, par exemple, que l'air.

## Revendications

1. Système de régulation de température pour installation de chauffage d'un immeuble au moyen d'un fluide caloporteur chauffé par une chaudière, ladite installation comprenant un circuit de chauffage pour transporter le fluide caloporteur entre ladite chaudière, une vanne de mixage (3) et des radiateurs (4), la vanne de mixage (3) étant agencée pour mélanger le fluide venant des radiateurs et le fluide venant de la chaudière pour alimenter le circuit de chauffage et un dispositif de contrôle (2) de la vanne de mixage (3) agencé pour asservir la température du fluide caloporteur alimentant les radiateurs (4), dit fluide d'entrée, à une température de consigne en fonction d'une valeur de température extérieure à l'immeuble, ledit système de régulation comportant en outre un bloc de régulation (8) relié en entrée à un capteur de température de fluide d'entrée (9), un détecteur de présence (10) et un capteur d'ensoleillement (11) ainsi qu'à des capteurs de température extérieure et intérieure à l'immeuble et relié en sortie à une entrée du dispositif de contrôle (2),
le bloc de régulation (8) comprenant un ensemble (20) de réseaux neuronaux (21, 22), un bloc (30) de détermination de température de consigne comportant un réseau neuronal (31) et un circuit (32) d'optimisation de la température du fluide d'entrée, un circuit (40) de détermination d'une température de confort au sein de l'immeuble connecté en sortie sur une entrée du circuit (32) et un circuit (50) de détermination d'un signal de température extérieure (Tem),
**caractérisé en ce qu'**une sortie du circuit (32) d'optimisation de la température du fluide d'entrée est bouclée sur une entrée du réseau neuronal (31) et **en ce que** le circuit (50) de détermination d'un signal de température extérieure (Tem) est connecté en entrée sur ladite sortie du circuit (32) ainsi qu'au capteur de température de fluide d'entrée (9) et en sortie au dispositif de contrôle.

2. Système selon la revendication 1, **caractérisé en ce que** l'ensemble (20) de réseaux neuronaux (21, 22) reçoit une information de température extérieure (60) depuis le capteur de température extérieure (7) et une information d'ensoleillement (110) depuis le capteur d'ensoleillement (11) et délivrent k composantes d'un premier vecteur de température extérieure (201) et d'un deuxième vecteur d'ensoleillement (202), lesdites k composantes représentant les prédictions de la température extérieure et de l'ensoleillement pour les k périodes élémentaires futures.

3. Système de régulation selon la revendication 2, **caractérisé en ce que** l'ensemble (20) de réseaux neuronaux (21, 22) réalise une combinaison linéaire des valeurs d'entrée ; chacune desdites valeurs d'entrée étant affectée d'un coefficient de pondération susceptible d'être corrigé par des moyens d'ajustement en fonction de la valeur prédite et de la valeur réelle.

4. Système de régulation selon l'une des revendications 2 à 3, **caractérisé en ce que** le réseau neuronal (31) reçoit, en entrée, lesdits vecteurs de température extérieure (201) et d'ensoleillement (202) de l'ensemble (20), la valeur de température intérieure (301) du capteur de température intérieure et sa propre information de sortie..

5. Système de régulation selon la revendication 4, **caractérisé en ce que** le réseau neuronal (31) réalise une combinaison linéaire des valeurs d'entrée ; chacune desdites valeurs d'entrée étant affectée d'un coefficient de pondération susceptible d'être corrigé par des moyens d'ajustement en fonction de la valeur prédite et de la valeur réelle.

6. Système de régulation selon la revendication 1, **caractérisé en ce que** ledit circuit (50) de détermination d'un signal de température extérieure est un circuit de contrôle de type PID.

7. Système de régulation selon l'une des revendications 1 à 6, **caractérisé en ce que** le circuit (40) de détermination d'une température de confort au sein de l'immeuble reçoit en entrée une information (90) de température souhaitée par l'usager de l'immeuble réglée depuis un tableau de commande, une information de présence de l'utilisateur, une indication de fenêtre ouverte ou une information de mode de fonctionnement.

8. Système de régulation selon l'une des revendications précédentes, **caractérisé en ce que** l'ensemble (20) de réseaux neuronaux (21, 22), le bloc (30) et ledit circuit (50) de détermination de la température extérieure (Tem) sont implémentés sur un site distant relié, via une connexion internet, à ladite installation de chauffage de l'immeuble.

9. Installation de chauffage d'un immeuble, comprenant un circuit de chauffage pour transporter un fluide caloporteur entre une chaudière, une vanne de mixage (3) et des radiateurs (4), la vanne de mixage (3) étant agencée pour mélanger le fluide venant des radiateurs et le fluide venant de la chaudière pour alimenter le circuit de chauffage et un dispositif de contrôle (2) de la vanne de mixage (3) agencé pour asservir la température du fluide d'entrée à une température de consigne en fonction d'une valeur de température extérieure à l'immeuble déterminée, **caractérisée en ce qu'**elle comporte un système de régulation selon l'une des revendications 1 à 8.

10. Installation de chauffage selon la revendication 9, **caractérisée en ce que** lesdits radiateurs sont implantés dans les sols dudit immeuble.

11. Installation de chauffage selon l'une des revendications 9 ou 10, **caractérisé en ce que** ledit fluide caloporteur est de l'air.

## Patentansprüche

1. System für die Temperaturregelung für Heizanlage eines Gebäudes mit Hilfe eines von einem Heizkessel erwärmten Wärmeträgerfluids, wobei die Anlage einen Heizkreis zum Transportieren des Wärmeträgerfluids zwischen dem Heizkessel, einem Mischventil (3) und Heizkörpern (4) umfasst, wobei das Mischventil (3) ausgebildet ist, um das von den Heizkörpern kommende Fluid und das von dem Heizkessel kommende Fluid zu mischen, um den Heizkreis zu versorgen, und eine Steuervorrichtung (2) des Mischventils (3), die ausgebildet ist, um die Temperatur des die Heizkörper (4) versorgenden, als Eingangsfluid bezeichneten Wärmeträgerfluids auf eine Solltemperatur in Abhängigkeit von einem Außentemperaturwert des Gebäudes einzustellen, wobei das Regelungssystem ferner einen Regelungsblock (8) aufweist, der am Eingang mit einem Eingangsfluid-Temperaturfühler (9), einem Anwesenheitsdetektor (10) und einem Sonnensensor (11) sowie mit Temperatursensoren außerhalb und innerhalb des Gebäudes verbunden ist und am Ausgang mit einem Eingang der Steuervorrichtung (2) verbunden ist,
wobei der Regelungsblock (8) eine Einheit (20) neuronaler Netze (21, 22), einen Block (30) zum Bestimmen der Solltemperatur, aufweisend ein neuronales Netz (31) und einen Optimierungskreis (32) der Temperatur des Eingangsfluids, einen Bestimmungskreis (40) einer Komforttemperatur im Gebäude, der am Ausgang an einen Eingang des Kreises (32) angeschlossen ist, und einen Bestimmungskreis (50) eines Signals der Außentemperatur (Tem) umfasst,
**dadurch gekennzeichnet, dass** ein Ausgang des Optimierungskreises (32) der Temperatur des Eingangsfluids mit einem Eingang des neuronalen Netzes (31) verbunden ist und dass der Bestimmungskreis (50) eines Signals der Außentemperatur (Tem) am Eingang mit dem Ausgang des Kreises (32) sowie mit dem Eingangsfluid-Temperaturfühler (9) und am Ausgang mit der Steuervorrichtung verbunden ist.

2. System nach Anspruch 1, **dadurch gekennzeichnet, dass** die Einheit (20) neuronaler Netze (21, 22) eine Außentemperaturinformation (60) vom Außentemperatursensor (7) und eine Sonneninformation (110) vom Sonnensensor (11) erhält und k Komponenten eines ersten Außentemperaturvektors (201) und eines zweiten Sonnenvektors (202) bereitstellen, wobei die k Komponenten Voraussagen der Außentemperatur und der Besonnung für die zukünftigen k elementaren Perioden darstellen.

3. Regelungssystem nach Anspruch 2, **dadurch gekennzeichnet, dass** die Einheit (20) neuronaler Netze (21, 22) eine lineare Kombination der Eingangswerte durchführt, wobei jeder der Werte einem Wichtungskoeffizienten zugeordnet ist, der von den Korrekturmitteln in Abhängigkeit vom vorausgesagten Wert und vom tatsächlichen Wert korrigierbar ist.

4. Regelungssystem nach einem der Ansprüche 2 bis 3, **dadurch gekennzeichnet, dass** das neuronale Netz (31) am Eingang die Außentemperatur-(201) und Sonnenvektoren (202) der Einheit (20), den Innentemperaturwert (301) des Innentemperatursensors und seine eigene Ausgangsinformation erhält.

5. Regelungssystem nach Anspruch 4, **dadurch gekennzeichnet, dass** das neuronale Netz (31) eine lineare Kombination der Eingangswerte durchführt, wobei jeder der Eingangswerte einem Wichtungskoeffizienten zugeordnet ist, der von den Korrekturmitteln in Abhängigkeit vom vorausgesagten Wert und vom tatsächlichen Wert korrigierbar ist.

6. Regelungssystem nach Anspruch 1, **dadurch gekennzeichnet, dass** der Bestimmungskreis (50) eines Außentemperatursignals ein Steuerkreis vom Typ PID ist.

7. Regelungssystem nach einem der Ansprüche 1 bis 6, **dadurch gekennzeichnet, dass** der Bestimmungskreis (40) einer Komforttemperatur im Gebäude am Eingang eine Information (90) über die von dem Benutzer des Gebäudes gewünschte Temperatur, die auf einem Steuertableau eingestellt ist, eine Anwesenheitsinformation des Benutzers, einen Hinweis über ein geöffnetes Fenster oder eine Betriebsmodusinformation erhält.

8. Regelungssystem nach einem der vorangehenden Ansprüche, **dadurch gekennzeichnet, dass** die Einheit (20) neuronaler Netze (21, 22), der Block (30) und der Bestimmungskreis (50) der Außentemperatur (Tem) an einem entfernten Standort implementiert sind, der über eine Internetverbindung mit der Heizanlage des Gebäudes verbunden ist.

9. Heizanlage eines Gebäudes, umfassend einen Heizkreis zum Transportieren eines Wärmeträgerfluids zwischen einem Heizkessel, einem Mischventil (3) und Heizkörpern (4), wobei das Mischventil (3) ausgebildet ist, um das von den Heizkörpern kommende Fluid und das von dem Heizkessel kommende Fluid zu mischen, um den Heizkreis zu versorgen, und eine Steuervorrichtung (2) des Mischventils (3), die ausgebildet ist, um die Temperatur des Eingangsfluids auf eine Solltemperatur in Abhängigkeit von einem Außentemperaturwert des Gebäudes einzustellen, **dadurch gekennzeichnet, dass** sie ein Regelungssystem nach einem der Ansprüche 1 bis 8 aufweist.

10. Heizanlage nach Anspruch 9, **dadurch gekennzeichnet, dass** die Heizkörper in den Böden des Gebäudes eingebaut sind.

11. Heizanlage nach einem der Ansprüche 9 oder 10, **dadurch gekennzeichnet, dass** das Wärmeträgerfluid Luft ist.

## Claims

1. A temperature regulating system for a heating installation of a building using a heat transfer fluid heated by a boiler, said installation comprising a heating circuit to convey the heat transfer fluid between said boiler, a mixing valve (3) and radiators (4), the mixing valve (3) being arranged to mix the fluid coming from the radiators and the fluid coming from the boiler to supply the heating circuit and a device (2) for controlling the mixing valve (3) arranged to slave the temperature of the heat transfer fluid supplying the radiators (4), called input fluid, to a setpoint temperature as a function of a temperature value outside the building, said regulating system further including a regulating block (8) connected as input to an input fluid temperature sensor (9), a presence detector (10) and a sunshine sensor (11) as well as two temperature sensors outside and inside the building, and connected as output to an input of the control device (2),
the regulating block (8) comprising a set (20) of neural networks (21, 22), a block (30) for determining a setpoint temperature including a neural network (31) and a circuit (32) for optimizing the temperature of the input fluid, a circuit (40) for determining a comfortable temperature within the building connected as output to an input of the circuit (32), and a circuit (50) for determining an outside temperature signal (Tem),
**characterized in that** an output of the circuit (32) for optimizing the temperature of the input fluid is looped on an input of the neural network (31) and **in that** the circuit (50) for determining an outside temperature signal (Tem) is connected as input on said output of the circuit (32) as well as an input fluid temperature sensor (9) and as output to the control device.

2. The system according to claim 1, **characterized in that** the set (20) of neural networks (21, 22) receives outside temperature information (60) from the outside temperature sensor (7) and sunshine information (110) from the sunshine sensor (11) and delivers k components of a first outside temperature vector (201) and a second sunshine vector (202), said k components representing the outside temperature and sunshine predictions for the k future elementary periods.

3. The regulating system according to claim 2, **characterized in that** the set (20) of neural networks (21, 22) performs a linear combination of the input values; each of said input values being assigned a weight coefficient that may be corrected by adjusting means based on the predicted value and the actual value.

4. The regulating system according to one of claims 2 to 3, **characterized in that** the neural network (31) receives, as input, said outside temperature (201) and sunshine (202) vectors of said set (20), the inside temperature value (301) of the inside temperature sensor and its own output information.

5. The regulating system according to claim 4, **characterized in that** the neural network (31) performs a linear combination of the input values; each of said input values being assigned a weight coefficient that may be corrected by adjusting means as a function of the predicted value and the actual value.

6. The regulating system according to claim 1, **characterized in that** said circuit (50) for determining an outside temperature signal is a control circuit of the PID type.

7. The regulating system according to one of claims 1 to 6, **characterized in that** the circuit (40) for determining a comfortable temperature within the building receives, as input, temperature information (90) desired by the user of the building adjusted from a control panel, presence information of the user, a window open indication or operating mode information.

8. The regulating system according to one of the preceding claims, **characterized in that** the set (20) of neural networks (21, 22), the block (30) and said circuit (50) for determining the outside temperature (Tem) are implemented on a remote site connected, by Internet, to said heating installation of the building.

9. A heating installation for a building, comprising a heating circuit for transporting a heat transfer fluid between a boiler, a mixing valve (3) and radiators (4), the mixing valve (3) being arranged to mix the fluid coming from the radiators and the fluid coming from the boiler to supply the heating circuit, and a device (2) for controlling the mixing valve (3) arranged to slave the temperature of the input fluid to a setpoint temperature as a function of a determined temperature value outside the building, **characterized in that** it includes a regulating system according to one of claims 1 to 8.

10. The heating installation according to claim 9, **characterized in that** said radiators are installed in the floors of said building.

11. The heating installation according to one of claims 9 or 10, **characterized in that** said heat transfer fluid is air.
